# EUROPÄISCHE PATENTSCHRIFT

(11) **EP 3 953 592 B1**
(45) Veröffentlichungstag und Bekanntmachung des Hinweises auf die Patenterteilung: **03.01.2024**
(21) Anmeldenummer: 20706182.1
(22) Anmeldetag: 17.02.2020
(51) Int. Cl.: F16B 21/18

(54) **SICHERUNGSRING, ANORDNUNG UND VERFAHREN ZUR MONTAGE DES SICHERUNGSRINGS**
CIRCLIP, ARRANGEMENT AND METHOD FOR INSTALLING THE CIRCLIP
BAGUE DE SÉCURITÉ, SYSTÈME ET PROCÉDÉ DE MONTAGE DE LA BAGUE DE SÉCURITÉ

(30) Priorität: 09.04.2019 DE 102019109286
(43) Veröffentlichungstag der Anmeldung: 16.02.2022
(73) Patentinhaber: Vibracoustic SE, 69469 Weinheim (DE)
(72) Erfinder: MORRISON, Michael, 21423 Winsen (DE)
(74) Vertreter: Patentanwälte Olbricht Buchhold Keulertz
(86) Internationale Anmeldenummer: PCT/EP2020/054043
(87) Internationale Veröffentlichungsnummer: WO 2020/207646

(56) Entgegenhaltungen:
- EP-A1- 2 492 529
- US-A- 2 898 135
- US-A1- 2010 138 116

## Beschreibung

Die Erfindung betrifft eine Anordnung.

Sogenannte Sprengringe sind im Stand der Technik bekannt und dienen zur formschlüssigen, axialen Festlegung von Bauteilen. Sie bestehen regelmäßig aus Federstahl-Draht und können zur Demontage des montierten, gesicherten Bauteils auch wieder geöffnet werden. Bei ungünstiger Toleranzlage und bei hoher Belastung können sich Sprengringe jedoch auch unerwünscht von selbst lösen. Eine Verriegelung, die ein Öffnen des Sprengrings verhindern würde, ist über zusätzliche Bauteile möglich. Allerdings sind derartige Verriegelungen nicht in der Lage, eine missbräuchliche Demontage zu verhindern. Hierfür sind weitere Bauteile oder zusätzlich integrierte Geometrieelemente erforderlich.

Aus der EP 2 492 529 A1 ist ein Kugellager mit einem Sensor bekannt. Das Lager umfasst einen ringartigen Sensorhalter, der einen magnetischen Wertgeber axial abdeckt. Der Sensorhalter ist an einem Außenring des Kugellagers und der Wertgeber ist an einem Innenring des Kugellagers jeweils drehfest angeordnet. Zudem ist eine Verschlussfeder offenbart, die zum Verschließen in einer Ausnehmung einbringbar ist.

Aus der US 2898 135 A ist ein Mittel zur Sicherung von inneren Sicherungsringen bekannt.

Es ist daher Aufgabe der vorliegenden Erfindung, eine Anordnung mit Sicherungsring bereitzustellen, durch die eine missbräuchliche Demontage verhindert und durch die unvermeidbare Beschädigung des Bauteils bei Demontage ein Missbrauch nachgewiesen werden kann.

Diese Aufgabe wird durch die Anordnung nach Anspruch 1 gelöst. Vorteilhafte Ausgestaltungen des Sicherungsrings und der Anordnung sind Gegenstand der abhängigen Ansprüche. Die erfindungsgemäße Anordnung umfasst ein Gehäuse und ein Bauteil, das durch den Sicherungsring in dem Gehäuse gesichert ist. Vorteilhaft ist der Sicherungsring mittels seines Außenumfangs, vorzugsweise formschlüssig, in Axialrichtung in dem Gehäuse festgelegt und liegt mit der Anlagefläche an dem Bauteil an, um das Bauteil in Axialrichtung festzulegen.

Der Sicherungsring dient zum Sichern eines Bauteils gegen missbräuchliche Demontage und umfasst ein Ringsegment, das einen Außenumfang zum Festlegen des Sicherungsrings in Axialrichtung und eine sich entlang einer Umfangsrichtung des Ringsegments erstreckende Ausnehmung aufweist, und ein Verschlusselement zum Verschließen der Ausnehmung, wobei das Ringsegment eine Anlagefläche ausbildet, um das Bauteil in Axialrichtung festzulegen, und wobei der Sicherungsring eine Verriegelungsvorrichtung zum Verriegeln des Verschlusselements in der Ausnehmung aufweist, die wenigstens zu einer der Anlagefläche abgewandten Seite des Sicherungsrings hin verdeckt ist.

Das zu sichernde Bauteil ist ein Schaltventil oder ein Deckel eines Federbeinstütz- oder Kopflagers und das Gehäuse ist Teil einer Luftfeder eines Nutz- oder Personenkraftfahrzeugs.

Der Außenumfang des Ringsegments ist vorteilhaft geeignet, das Ringsegment formschlüssig in Axialrichtung festzulegen, jedoch ist auch eine kraftschlüssige Festlegung denkbar. Die Ausnehmung des Ringsegments dient dem Zusammendrücken des Ringsegments auf einen kleineren Durchmesser (im Folgenden Montagedurchmesser genannt) für die Montage. Nach der Montage des Ringsegments öffnet sich dieses durch die Rückfederungskräfte wieder oder er wird durch eine Vorrichtung geöffnet. In die Ausnehmung des Ringsegments kann anschließend das Verschlusselement eingefügt werden. Vorteilhaft ist das Verschlusselement ebenfalls als Ringsegment ausgestaltet. Besonders vorteilhaft bilden das Ringsegment und das Verschlusselement einen umlaufend abgeschlossenen Ringkörper, nachdem das Verschlusselement eingefügt worden ist. Vorteilhaft erstreckt sich das Verschlusselement entlang des Umfangs des Ringkörpers über einen Winkel von höchstens 90°, besonders vorteilhaft höchstens 60°. Die Querschnitte des Verschlusselements und des Ringsegments können unterschiedlich ausgestaltet sein.

Da die Verriegelungsvorrichtung wenigstens zu der der Anlagefläche abgewandten Seite des Sicherungsrings hin verdeckt ist, kann auf diese im montierten Zustand nicht zugegriffen werden. Vorteilhaft ist die Verriegelungsvorrichtung außerdem zu der Innenseite des Sicherungsrings verdeckt, sodass auch von dort nicht auf die Verriegelungsvorrichtung zugegriffen werden kann. Dadurch wird eine missbräuchliche Demontage vermieden und der Missbrauch durch sichtbare Beschädigungen nachweisbar, da nach der Montage von Ringsegment und Verschlusselement nicht mehr auf die Verriegelungsvorrichtung zugegriffen werden kann und das Verschlusselement folglich nicht mehr ohne Zerstörung gelöst werden kann. Somit kann verhindert werden, dass der Sicherungsring ohne sichtbare Beschädigung, die auf einen Missbrauchsfall hinweisen würde, demontiert und wieder montiert werden kann.

Vorteilhaft ist die Verriegelungsvorrichtung durch das Verschlusselement und/oder das Ringsegment zu der der Anlagefläche abgewandten Seite des Sicherungsrings und/oder der Innenseite des Sicherungsrings hin verdeckt.

Bei einer vorteilhaften Ausgestaltung ist die Verriegelungsvorrichtung an dem Verschlusselement vorgesehen. Dies kann dadurch geschehen, dass ein in das Verschlusselement integriertes Formteil vorgesehen wird. Alternativ dazu kann die Verriegelungsvorrichtung in das Ringsegment integriert sein.

Vorteilhaft sind das Ringsegment und das Verschlusselement mittels einer Schnappverbindung miteinander verbunden. Besonders vorteilhaft ist die Verriegelungsvorrichtung als Schnappfeder ausgebildet. Eine Schnappverbindung stellt eine Verbindungsform dar, die eine besonders leichte Montage des Sicherungsrings ermöglicht, da die Verbindung beim Einfügen des Verschlusselements automatisch hergestellt wird, ohne dass weitere Montageschritte erforderlich sind. Zudem stellt die Schnappverbindung eine stabile Verbindungsform dar, die die auftretenden Betriebskräfte aufnehmen kann. Diese Betriebskräfte könnten ohne das Verschlusselement zu einem Zusammendrücken des Ringsegments führen, wodurch dieses aus dem Gehäuse springen und seine bestimmungsgemäße Sicherungsfunktion verlieren könnte. Die Schnappverbindung muss so ausgebildet sein, dass sie in Montagerichtung nachgiebige Eigenschaften aufweist, also eine Montage des Verschlusselements ermöglicht. Wenn die als Schnappfeder ausgebildete Verriegelungsvorrichtung zu der der Anlagefläche abgewandten Seite des Sicherungsrings hin verdeckt ist, ist diese im montierten Zustand des Sicherungsrings nicht zugänglich, sodass die Schnappverbindung nicht gelöst werden kann, ohne den Sicherungsring zu beschädigen.

Bei einer vorteilhaften Ausgestaltung sind das Verschlusselement und das Ringsegment als separate Einzelteile ausgebildet. Alternativ dazu kann das Verschlusselement schwenkbar mit dem Ringsegment verbunden sein. Vorzugsweise kann das Verschlusselement durch ein Filmscharnier mit dem Ringsegment verbunden sein. Somit umfasst der Sicherungsring wenige Einzelteile und ermöglicht eine einfache Montage.

Bei einer vorteilhaften Ausgestaltung weist der Außenumfang des Sicherungsrings einen Vorsprung zum Eingreifen in eine Aussparung eines Gehäuses auf. Der Vorsprung kann umlaufend sein, sich also über den gesamten Außenumfang erstrecken, unterbrochen sein oder nur punktuell vorgesehen sein. Insbesondere kann der Vorsprung so ausgebildet sein, dass er in eine Gehäusenut eingreifen kann. Dabei dient der Vorsprung der axialen Fixierung und Sicherung gegen ein Herausspringen des Sicherungsrings aus dem Gehäuse. Zu diesem Zweck weist vorzugsweise der Vorsprung einen Versteifungsbereich auf und/oder das Ringsegment weist Versteifungsrippen auf.

Vorteilhaft sind das Verschlusselement und/oder das Ringsegment aus Kunststoff hergestellt. Kunststoff bietet eine hohe Designfreiheit bei der Gestaltung von Bauteilen, welche eine unbemerkte, missbräuchliche Öffnung des Ringes verhindert.

Bei einer vorteilhaften Ausgestaltung beträgt ein Verhältnis einer Länge (L) in Axialrichtung des Ringsegments zu einer Höhe (H) des Ringsegments zwischen 0,5 und 5. Besonders vorteilhaft beträgt das Verhältnis zwischen 0,75 und 2,5. Dabei ist die Höhe des Ringsegments als die Hälfte der Differenz aus Außendurchmesser und Innendurchmesser definiert. Die Länge entspricht der Erstreckung des Ringsegments in Axialrichtung. Die angegebenen Verhältnisse führen zu einem hohen Flächenträgheitsmoment gegen Torsion, da die Länge des Ringsegments in Axialrichtung annähernd so groß oder größer ist, wie seine Höhe.

Vorteilhaft beträgt ein Verhältnis eines Innendurchmessers des Ringsegments zu der Höhe wenigstens 3, das heißt der Innendurchmesser entspricht wenigstens dem Dreifachen der Höhe. Besonders vorteilhaft beträgt das Verhältnis wenigstens 4. Dadurch ist eine vorteilhafte Nachgiebigkeit gewährleistet, um das Ringsegment zur Montage zusammenzudrücken, während der der Ring in eine äußere Führung formschlüssig einschnappt.

Bei einer vorteilhaften Ausgestaltung beträgt ein Verhältnis der Länge zu dem Innendurchmesser des Ringsegments wenigstens 1/8. Besonders vorteilhaft beträgt das Verhältnis wenigstens 1/6.

Das Ringsegment weist eine vorteilhafte Verwindungssteifigkeit auf, indem der Querschnitt des Ringsegments ein möglichst hohes Flächenträgheitsmoment gegenüber Torsion aufweist, gleichzeitig aber eine Verringerung des Gesamtdurchmessers bei der Montage noch zerstörungsfrei möglich ist. Somit kann das Verschlusselement nicht durch Biegen oder Verwinden des gesamten Sicherungsrings entfernt werden. Durch vorteilhafte Verhältnisse von Länge, Höhe und Innendurchmesser des Ringsegments ist dieses ausreichend verwindungssteif, um hohe axiale Kräfte übertragen zu können. Hierdurch sind keine weiteren stützenden Strukturen notwendig, welche ein Verwinden des Sicherungsrings und somit eine ungewollte Demontage verhindern müssten.

Das offenbarungsgemäße Verfahren zur Montage eines Sicherungsrings umfasst die folgenden Schritte:
Bereitstellen eines Gehäuses, in dem ein Bauteil angeordnet ist, und des Sicherungsrings, bei dem die Ausnehmung unverschlossen ist,
Zusammendrücken oder Zusammenziehen des Ringsegments, um einen Außendurchmesser des Ringsegments elastisch auf einen Montagedurchmesser zu verkleinern,
Einbringen des Ringsegments in das Gehäuse derart, dass die Anlagefläche an dem Bauteil anliegt, um dieses in Axialrichtung festzulegen,
Entspannen des Ringsegments, sodass dieses auf den Außendurchmesser zurückfedert und mittels seines Außenumfangs, vorzugsweise formschlüssig, in Axialrichtung in dem Gehäuse festgelegt wird, und
Verschließen der Ausnehmung mittels des Verschlusselements.

Nachfolgend wird die Erfindung anhand von Ausführungsbeispielen näher beschrieben, die in den Zeichnungen schematisch dargestellt sind. Hierbei zeigt:
- Fig. 1: eine perspektivische Ansicht des Sicherungsrings gemäß eines ersten Ausführungsbeispiels der erfindungsgemäßen Anordnung;
- Fig. 2: eine perspektivische Ansicht des Sicherungsrings gemäß eines zweiten Ausführungsbeispiels der erfindungsgemäßen Anordnung;
- Fig. 3: eine perspektivische Ansicht des Sicherungsrings aus Fig. 2 mit einem Schaltventil;
- Fig. 4: eine Querschnittsansicht des Sicherungsrings gemäß eines dritten Ausführungsbeispiels der erfindungsgemäßen Anordnung;
- Fig. 5: eine Querschnittsansicht des Sicherungsrings gemäß eines vierten Ausführungsbeispiels der erfindungsgemäßen Anordnung mit einem Schaltventil und einem Gehäuse; und
- Fig. 6: eine Querschnittsansicht des Sicherungsrings gemäß eines fünften Ausführungsbeispiels der erfindungsgemäßen Anordnung mit einem Schaltventil und einem Gehäuse.

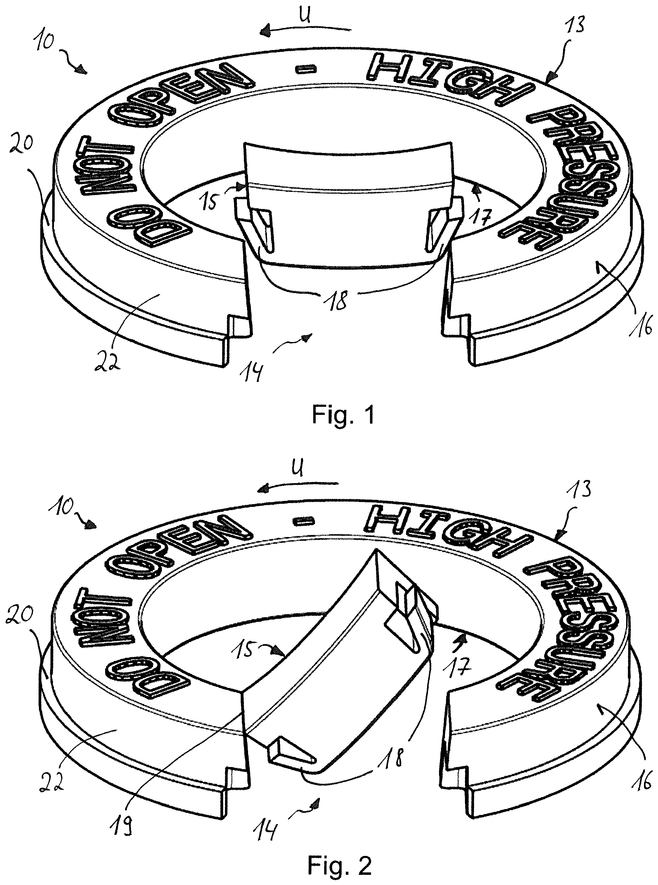

Fig. 1 und 2 zeigen jeweils einen Sicherungsring 10 für ein Bauteil 11, das vorliegend ein Schaltventil ist. Der Sicherungsring 10 weist ein Ringsegment 13 und ein Verschlusselement 15 auf, die aus Kunststoff hergestellt sind. An dem Ringsegment 13 ist eine Ausnehmung 14, die sich entlang einer Umfangsrichtung U des Ringsegments 13 erstreckt, und ein Außenumfang 16 vorgesehen. An dem Außenumfang 16 ist ein umlaufender Vorsprung 20 angebracht, der einen Stützabsatz 22 ausbildet. Ferner weist das Ringsegment 13 eine Anlagefläche 17 zum Festlegen eines Bauteils auf.

Das Verschlusselement 15 dient zum Verschließen der Ausnehmung 14. In dem Ausführungsbeispiel gemäß Fig. 1 sind das Verschlusselement 15 und das Ringsegment 13 als separate Einzelteile ausgebildet, während in Fig. 2 das Verschlusselement 15 zum Beispiel durch ein Filmscharnier 19 schwenkbar mit dem Ringsegment 13 verbunden ist.

Das Verschlusselement 15 weist eine Verriegelungsvorrichtung 18 zum Verriegeln des Verschlusselements 15 in der Ausnehmung 14 auf, die im vorliegenden Ausführungsbeispiel als Schnappfeder ausgebildet ist, sodass das Ringsegment 13 und das Verschlusselement 15 mittels einer Schnappverbindung verbunden werden können. Die Schnappverbindung ist so ausgebildet, dass sie in Montagerichtung nachgiebige Eigenschaften aufweist, also eine Montage des Verschlusselements 15 ermöglicht.

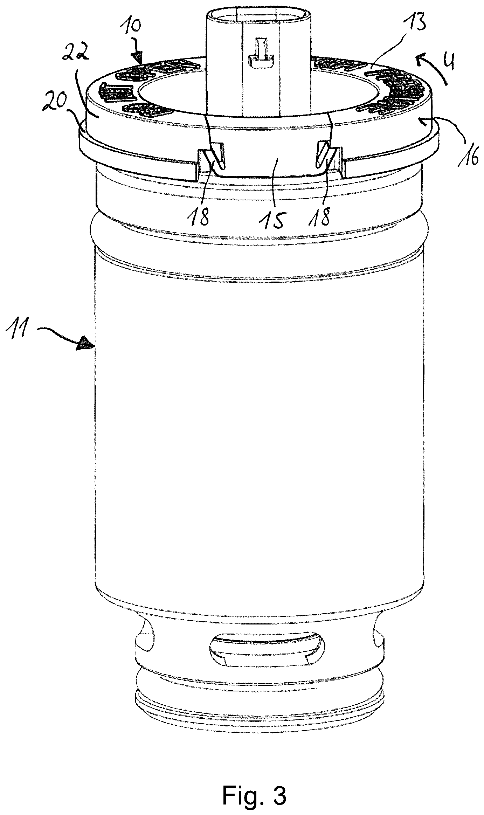

Fig. 3 zeigt anschaulich den Sicherungsring 10 im montierten Zustand an dem Bauteil 11. Der Sicherungsring 10 ist an dem Bauteil 11 angebracht, wobei das Verschlusselement 15 die Ausnehmung 14 verschließt. Dabei ist das Verschlusselement 15 ebenfalls als Ringsegment ausgestaltet, sodass Ringsegment 13 und das Verschlusselement 15 einen umlaufend abgeschlossenen Ringkörper ausbilden, wobei sich die Querschnitte des Verschlusselements 15 und des Ringsegments 13 unterscheiden können.

Die Verriegelungsvorrichtung 18 ist durch das Verschlusselement 15 und das Ringsegment 13 zu der der Anlagefläche 17 abgewandten Seite des Sicherungsrings 10 sowie zu der Innenseite des Sicherungsrings 10 hin verdeckt. Somit ist die Verriegelungsvorrichtung 18 von diesen Seiten aus unzugänglich.

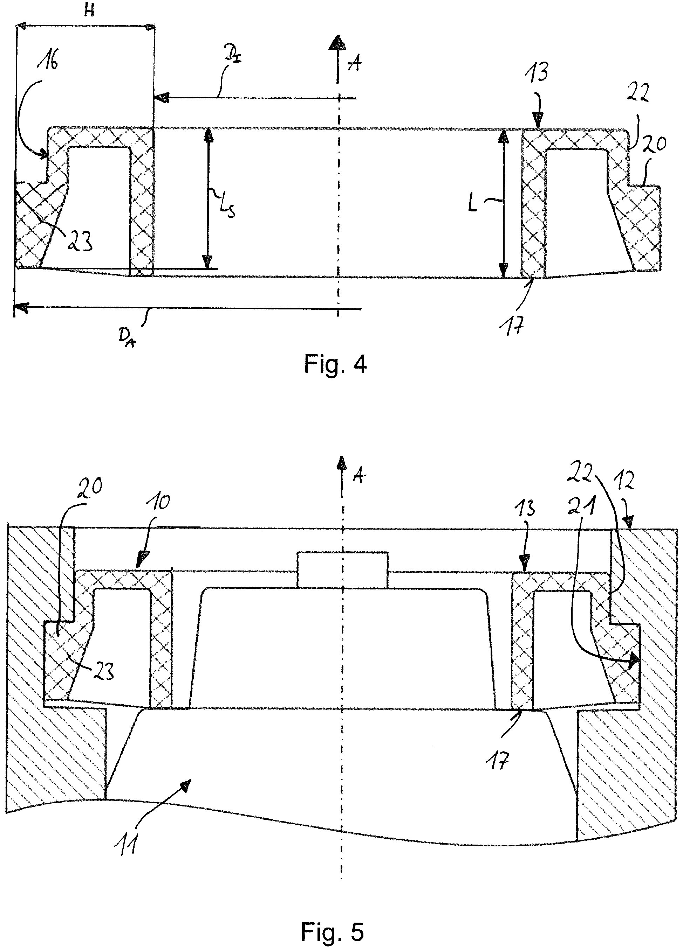

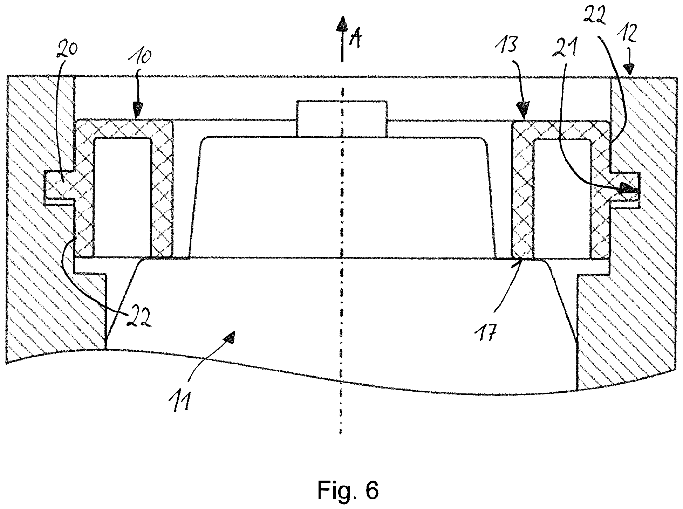

Fig. 5 und 6 zeigen eine Querschnittsansicht, in dem ferner ein Gehäuse 12 dargestellt ist. Aus dieser Ansicht geht hervor, dass die Verriegelungsvorrichtung 18 im montierten Zustand durch das Bauteil 11 und das Gehäuse 12 zu der Außenseite des Sicherungsrings 10 und zu einer der Anlagefläche 17 zugewandten Seite hin verdeckt sind. Somit wird eine missbräuchliche Demontage vermieden, da nach der Montage von Ringsegment 13 und Verschlusselement 15 nicht mehr auf die Verriegelungsvorrichtung 18 zugegriffen werden kann und das Verschlusselement 15 folglich nicht mehr ohne Zerstörung oder sichtbare Beschädigung des Sicherungsrings 10 gelöst werden kann.

Somit stellt die Schnappverbindung eine geeignete Verbindungsform zur Verhinderung einer missbräuchlichen Demontage dar, die zudem eine besonders leichte Montage des Sicherungsrings 10 ermöglicht, da die Verbindung beim Einfügen des Verschlusselements 15 automatisch hergestellt wird, ohne dass weitere Montageschritte erforderlich sind. Schließlich können durch die Schnappverbindung die auftretenden Betriebskräfte zuverlässig aufgenommen werden, wodurch ein ungewolltes Herausspringen des Sicherungsrings 10 aus dem Gehäuse 12 vermieden wird.

Fig. 4 zeigt anschaulich einen Querschnitt des Ringsegments 13. Dabei beträgt vorteilhaft ein Verhältnis einer Länge L in Axialrichtung A des Ringsegments 13 zu einer Höhe H des Ringsegments zwischen 0,5 und 5, besonders vorteilhaft zwischen 0,75 und 2,5. Die Höhe H des Ringsegments ist definiert als die Hälfte der Differenz von Außendurchmesser D_{A} zu Innendurchmesser D_{I}. Die Länge L entspricht der Erstreckung des Ringsegments 13 in Axialrichtung A. Die angegebenen Verhältnisse führen zu einem hohen Flächenträgheitsmoment gegen Torsion, da die Länge L des Ringsegments in Axialrichtung A annähernd so groß oder größer ist als seine Höhe H.

Ein Verhältnis des Innendurchmessers D_{I} des Ringsegments 13 zu der Höhe H beträgt vorteilhaft wenigstens 3, besonders vorteilhaft wenigstens 4. Dadurch ist eine Nachgiebigkeit gewährleistet, die ausreicht, um das Ringsegment 13 aus Kunststoff zur Montage beschädigungsfrei zusammenzudrücken.

Ein Verhältnis der Länge L zu dem Innendurchmesser D_{I} des Ringsegments 13 beträgt vorteilhaft wenigstens 1/8, besonders vorteilhaft wenigstens 1/6.

Das Ringsegment 13 weist eine hohe Verwindungssteifigkeit auf, indem der Querschnitt des Ringsegments 13 ein möglichst hohes Flächenträgheitsmoment gegenüber Torsion aufweist, gleichzeitig aber eine Verringerung des Gesamtdurchmessers bei der Montage noch zerstörungsfrei möglich ist. Somit kann das Verschlusselement 15 nicht durch Biegen oder Verwinden des gesamten Sicherungsrings 10 entfernt werden. Durch vorteilhafte Verhältnisse von Länge L, Höhe H und Innendurchmesser D_{I} des Ringsegments 13 ist dieses ausreichend verwindungssteif, um hohe axiale Kräfte übertragen zu können. Zudem verbessert das Vorsehen von Versteifungsbereichen 23 und/oder Versteifungsrippen (nicht dargestellt) die Steifigkeit des Sicherungsrings 10. Darüber hinaus sind keine weiteren stützenden Strukturen notwendig, welche ein Verwinden des Sicherungsrings 10 und somit eine ungewollte Demontage verhindern müssten.

Die Anordnung des Sicherungsrings 10 mit dem Bauteil 11 und dem Gehäuse 12 geht anschaulich aus Fig. 5 und 6 hervor. Dabei ist zu sehen, dass das Bauteil 11 in Axialrichtung A durch den Sicherungsring 10 gesichert ist, indem es an der Anlagefläche 17 anliegt und so in Axialrichtung A festgelegt ist. Ein am Außenumfang 16 gebildeter Stützabsatz 22 liegt an einer Gehäusewand an, um ein Verzwängen des Sicherungsrings 10 zu verhindern. Der Vorsprung 20 des Sicherungsrings 10 greift in eine Aussparung 21 des Gehäuses 12, die vorliegend als umlaufende Gehäusenut ausgebildet ist, ein, sodass der Sicherungsring 10 formschlüssig in Axialrichtung A in dem Gehäuse 12 festgelegt ist.

Zur Montage des Sicherungsrings 10 wird zunächst das Ringsegment 13 zusammengedrückt oder zusammengezogen, um den Außendurchmesser D_{A} des Ringsegments 13 elastisch auf einen Montagedurchmesser zu verkleinern. Dann wird das Ringsegment 13 in das Gehäuse 12 derart eingebracht, dass die Anlagefläche 17 an dem Bauteil 11 anliegt, um dieses in Axialrichtung A festzulegen. Anschließend wird das Ringsegment 13 entspannt, sodass dieses auf den Außendurchmesser D_{A} zurückfedert und mittels des am Außenumfang 16 angebrachten Vorsprungs 20 formschlüssig in Axialrichtung A in der Aussparung 21 des Gehäuses 12 festgelegt wird. Schließlich wird die Ausnehmung 14 mittels des Verschlusselements 15 verschlossen. Die Sicherungsringe 10 gemäß den vorliegenden Ausführungsbeispielen verhindern eine missbräuchliche Demontage und weisen dabei eine hohe Steifigkeit, insbesondere eine hohe Verwindungssteifigkeit auf.

### Bezugszeichenliste

- 10: Sicherungsring
- 11: Bauteil
- 12: Gehäuse
- 13: Ringsegment
- 14: Ausnehmung
- 15: Verschlusselement
- 16: Außenumfang
- 17: Anlagefläche
- 18: Verriegelungsvorrichtung
- 19: Filmscharnier
- 20: Vorsprung
- 21: Aussparung
- 22: Stützabsatz
- 23: Versteifungsbereich

- A: Axialrichtung
- D_{A}: Außendurchmesser
- D_{I}: Innendurchmesser
- L: Länge
- Ls: Stützlänge
- U: Umfangsrichtung
- H: Höhe

## Patentansprüche

1. Anordnung umfassend ein Gehäuse (12) und ein Bauteil (11), das durch einen Sicherungsring (10) in dem Gehäuse (12) gesichert ist, wobei der Sicherungsring (10) zum Sichern des Bauteils (11) dient, umfassend ein Ringsegment (13), das einen Außenumfang (16) zum Festlegen des Sicherungsrings (10) in Axialrichtung (A) und eine sich entlang einer Umfangsrichtung (U) des Ringsegments (13) erstreckende Ausnehmung (14) aufweist, und ein Verschlusselement (15) zum lösbaren Verschließen der Ausnehmung (14), wobei das Ringsegment (13) eine Anlagefläche (17) ausbildet, um das Bauteil (11) in Axialrichtung (A) festzulegen, und wobei der Sicherungsring (10) eine Verriegelungsvorrichtung (18) zum Verriegeln des Verschlusselements (15) in der Ausnehmung (14) aufweist, die wenigstens zu einer der Anlagefläche (17) abgewandten Seite des Sicherungsrings (10) hin verdeckt ist, **dadurch gekennzeichnet, dass** das Bauteil (11) ein Schaltventil oder ein Deckel eines Federbeinstütz- oder Kopflagers ist und das Gehäuse Teil einer Luftfeder eines Nutz- oder Personenkraftfahrzeugs ist.

2. Anordnung nach Anspruch 1, **dadurch gekennzeichnet, dass** der Sicherungsring (10) mittels seines Außenumfangs (16), vorzugsweise formschlüssig, in Axialrichtung (A) in dem Gehäuse (12) festgelegt ist und mit der Anlagefläche (17) an dem Bauteil (11) anliegt, um das Bauteil (11) in Axialrichtung (A) festzulegen.

3. Anordnung nach Anspruch 1 oder 2, **dadurch gekennzeichnet, dass** die Verriegelungsvorrichtung (18) durch das Verschlusselement (15) und/oder das Ringsegment (13) zu der der Anlagefläche (17) abgewandten Seite des Sicherungsrings (10) hin verdeckt ist.

4. Anordnung nach einem der voranstehenden Ansprüche, **dadurch gekennzeichnet, dass** die Verriegelungsvorrichtung (18) an dem Verschlusselement (15) vorgesehen ist.

5. Anordnung nach einem der vorstehenden Ansprüche, **dadurch gekennzeichnet, dass** die Verriegelungsvorrichtung (18) als Schnappfeder ausgebildet ist.

6. Anordnung nach einem der vorstehenden Ansprüche, **dadurch gekennzeichnet, dass** das Verschlusselement (15) und das Ringsegment (13) als separate Einzelteile ausgebildet sind.

7. Anordnung nach einem der Ansprüche 1 bis 5, **dadurch gekennzeichnet, dass** das Verschlusselement (15) schwenkbar mit dem Ringsegment (13) verbunden ist, wobei vorzugsweise das Verschlusselement (15) durch ein Filmscharnier (19) mit dem Ringsegment (13) verbunden ist.

8. Anordnung nach einem der vorstehenden Ansprüche, **dadurch gekennzeichnet, dass** der Außenumfang (16) einen Vorsprung (20) zum Eingreifen in eine Aussparung (21) eines Gehäuses (12) aufweist.

9. Anordnung nach einem der vorstehenden Ansprüche, **dadurch gekennzeichnet, dass** das Verschlusselement (15) und/oder das Ringsegment (13) aus Kunststoff hergestellt sind.

10. Anordnung nach einem der vorstehenden Ansprüche, **dadurch gekennzeichnet, dass** ein Verhältnis einer Länge (L) in Axialrichtung (A) des Ringsegments (13) zu einer Höhe H des Ringsegments (13) zwischen 0,5 und 5 beträgt, wobei das Verhältnis vorzugsweise zwischen 0,75 und 2,5 beträgt.

11. Anordnung nach einem der vorstehenden Ansprüche, **dadurch gekennzeichnet, dass** ein Verhältnis eines Innendurchmessers (DI) des Ringsegments (13) zu der Höhe H wenigstens 3 beträgt, wobei vorzugsweise das Verhältnis wenigstens 4 beträgt.

12. Anordnung nach einem der vorstehenden Ansprüche, **dadurch gekennzeichnet, dass** ein Verhältnis der Länge (L) zu dem Innendurchmesser (DI) des Ringsegments (13) wenigstens 1/8 beträgt, wobei vorzugsweise das Verhältnis wenigstens 1/6 beträgt.

## Claims

1. Arrangement comprising a housing (12) and a component (11) which is secured in the housing (12) by a retaining ring (10), the retaining ring (10) serving to secure the component (11), comprising a ring segment (13) which has an outer circumference (16) for securing the retaining ring (10) in the axial direction (A) and a recess (14) extending along a circumferential direction (U) of the ring segment (13), and a closure element (15) for releasably closing the recess (14), the ring segment (13) forming a contact surface (17), to fix the component (11) in the axial direction (A), and wherein the retaining ring (10) has a locking device (18) for locking the closure element (15) in the recess (14), which is concealed at least towards a side of the retaining ring (10) facing away from the contact surface (17), **characterized in that** the component (11) is a shift valve or a cover of a strut support or head bearing and the housing is part of an air spring of a commercial or passenger motor vehicle.

2. Arrangement according to claim 1, **characterized in that** the retaining ring (10) is fixed in the housing (12) in the axial direction (A) by means of its outer circumference (16), preferably with a positive fit, and bears against the component (11) with the bearing surface (17) to fix the component (11) in the axial direction (A).

3. Arrangement according to claim 1 or 2, **characterized in that** the locking device (18) is concealed by the locking element (15) and/or the ring segment (13) towards the side of the retaining ring (10) facing away from the contact surface (17).

4. Arrangement according to one of the preceding claims, **characterized in that** the locking device (18) is provided on the closure element (15).

5. Arrangement according to one of the preceding claims, **characterized in that** the locking device (18) is designed as a snap spring.

6. Arrangement according to one of the preceding claims, **characterized in that** the closure element (15) and the ring segment (13) are designed as separate individual parts.

7. Arrangement according to one of claims 1 to 5, **characterized in that** the closure element (15) is pivotably connected to the ring segment (13), preferably the closure element (15) being connected to the ring segment (13) by a film hinge (19).

8. Arrangement according to one of the preceding claims, **characterized in that** the outer circumference (16) has a projection (20) for engaging in a recess (21) of a housing (12).

9. Arrangement according to one of the preceding claims, **characterized in that** the closure element (15) and/or the ring segment (13) are made of plastic.

10. Arrangement according to one of the preceding claims, **characterized in that** a ratio of a length (L) in the axial direction (A) of the ring segment (13) to a height H of the ring segment (13) is between 0.5 and 5, the ratio preferably being between 0.75 and 2.5.

11. Arrangement according to one of the preceding claims, **characterized in that** a ratio of an inner diameter (DI) of the ring segment (13) to the height H is at least 3, the ratio preferably being at least 4.

12. Arrangement according to one of the preceding claims, **characterized in that** a ratio of the length (L) to the inside diameter (DI) of the ring segment (13) is at least 1/8, preferably the ratio being at least 1/6.

## Revendications

1. Agencement comprenant un boîtier (12) et un composant (11) qui est fixé dans le boîtier (12) par un circlip (10), le circlip (10) servant à fixer le composant (11), comprenant un segment annulaire (13), qui présente une périphérie extérieure (16) pour fixer le circlip (10) dans la direction axiale (A) et un évidement (14) s'étendant le long d'une direction périphérique (U) du segment annulaire (13), et un élément de fermeture (15) pour fermer l'évidement (14) de manière amovible, le segment annulaire (13) formant une surface d'appui (17), pour fixer le composant (11) dans la direction axiale (A), et le circlip (10) présentant un dispositif de verrouillage (18) pour verrouiller l'élément de fermeture (15) dans l'évidement (14), qui est masqué au moins vers un côté du circlip (10) opposé à la surface d'appui (17), **caractérisé en ce que** le composant (11) est une soupape de commutation ou un couvercle d'un palier d'appui de jambe de force à ressort ou d'un palier de tête et le boîtier fait partie d'un ressort pneumatique d'un véhicule utilitaire ou d'un véhicule de tourisme.

2. Agencement selon la revendication 1, **caractérisé en ce que** le circlip (10) est fixé dans la direction axiale (A) dans le boîtier (12) au moyen de sa périphérie extérieure (16), de préférence par complémentarité de forme, et s'applique par la surface d'appui (17) contre le composant (11) pour fixer le composant (11) dans la direction axiale (A).

3. Agencement selon la revendication 1 ou 2, **caractérisé en ce que** le dispositif de verrouillage (18) est masqué par l'élément de fermeture (15) et/ou le segment annulaire (13) vers le côté du circlip (10) opposé à la surface d'appui (17).

4. Agencement selon l'une quelconque des revendications précédentes, **caractérisé en ce que** le dispositif de verrouillage (18) est prévu sur l'élément de fermeture (15).

5. Agencement selon l'une des revendications précédentes, **caractérisé en ce que** le dispositif de verrouillage (18) est conçu comme un ressort à déclic.

6. Agencement selon l'une des revendications précédentes, **caractérisé en ce que** l'élément de fermeture (15) et le segment annulaire (13) sont réalisés sous forme de pièces individuelles séparées.

7. Agencement selon l'une des revendications 1 à 5, **caractérisé en ce que** l'élément de fermeture (15) est relié de manière pivotante au segment annulaire (13), l'élément de fermeture (15) étant de préférence relié au segment annulaire (13) par une charnière pelliculaire (19).

8. Agencement selon l'une quelconque des revendications précédentes, **caractérisé en ce que** la périphérie extérieure (16) comporte une saillie (20) destinée à s'engager dans un évidement (21) d'un boîtier (12).

9. Agencement selon l'une quelconque des revendications précédentes, **caractérisé en ce que** l'élément de fermeture (15) et/ou le segment annulaire (13) sont fabriqués en matière plastique.

10. Agencement selon l'une quelconque des revendications précédentes, **caractérisé en ce qu'**un rapport d'une longueur (L) dans la direction axiale (A) du segment annulaire (13) sur une hauteur H du segment annulaire (13) est compris entre 0,5 et 5, ledit rapport étant de préférence compris entre 0,75 et 2,5.

11. Agencement selon l'une quelconque des revendications précédentes, **caractérisé en ce qu'**un rapport entre un diamètre intérieur (DI) du segment annulaire (13) et la hauteur H est d'au moins 3, ledit rapport étant de préférence d'au moins 4.

12. Agencement selon l'une quelconque des revendications précédentes, **caractérisé en ce qu'**un rapport de la longueur (L) sur le diamètre intérieur (DI) du segment annulaire (13) est d'au moins 1/8, de préférence ledit rapport étant d'au moins 1/6.
